# EUROPÄISCHE PATENTSCHRIFT

(11) **EP 3 286 424 B1**
(45) Veröffentlichungstag und Bekanntmachung des Hinweises auf die Patenterteilung: **12.06.2019**
(21) Anmeldenummer: 16711260.6
(22) Anmeldetag: 21.03.2016
(51) Int. Cl.: F02M 21/02

(54) **GASVENTIL**
GAS VALVE
INJECTEUR DE GAZ

(30) Priorität: 21.04.2015 DE 102015207239
(43) Veröffentlichungstag der Anmeldung: 28.02.2018
(73) Patentinhaber: Robert Bosch GmbH, 70442 Stuttgart (DE)
(72) Erfinder: KURZ, Michael, 73207 Plochingen (DE)
(86) Internationale Anmeldenummer: PCT/EP2016/056121
(87) Internationale Veröffentlichungsnummer: WO 2016/169708

(56) Entgegenhaltungen:
- EP-A1- 1 114 929
- WO-A1-91/17379
- US-A- 5 752 489

## Beschreibung

Die Erfindung betrifft ein Gasventil zum Eindosieren eines gasförmigen Brennstoffs in einen Ansaugtrakt einer Verbrennungskraftmaschine mit den Merkmalen des Oberbegriffs des Anspruchs 1. Ein solches Gasventil kann im Bereich der Fahrzeugtechnik zur Brennstoffversorgung von Gas- oder Gas-Diesel-Motoren in Personenkraft- oder Nutzfahrzeugen, in Schienenfahrzeugen und/oder auf Schiffen eingesetzt werden. Darüber hinaus sind weitere Applikationen, beispielsweise in Anlagen zur Energiegewinnung und/oder Energieerzeugung, möglich.

### Stand der Technik

Aus der Offenlegungsschrift DE 198 22 906 A1 ist ein elektromagnetischer Aktuator zur Betätigung eines Stellgliedes mit wenigstens einem Elektromagneten bekannt, der ein mit einer Spule und wenigstens einer Polfläche versehenes Joch sowie einen mit dem Stellglied verbundenen Anker aufweist. Der Anker ist gegen die Kraft einer Rückstellfeder in Richtung auf die Polfläche des Elektromagneten bewegbar geführt und an dieser zur Anlage bringbar. Um zu verhindern, dass der Anker mit hoher Geschwindigkeit auf der Polfläche auftrifft und von dieser wieder abprallt, was zu einer sinkenden Betriebssicherheit und/oder zu einer störenden Geräuschentwicklung führen kann, wird vorgeschlagen, dass der Anker und/oder das Joch zumindest in Teilbereichen in der Bewegungsrichtung des Ankers elastisch verformbar ausgebildet ist bzw. sind. Die Verformung soll die Bewegung des Ankers dämpfen, so dass die Gefahr eines Prellens und/oder störender Geräusche reduziert ist. Auch aus der US 5 752 489 A ist eine Dosiereinrichtung für gasförmige Kraftstoffe mit einem beweglichen Ventilelement bekannt, das eine Dämpfungseinrichtung aufweist.

Ausgehend von dem vorstehend genannten Stand der Technik liegt der vorliegenden Erfindung die Aufgabe zugrunde, ein Gasventil zum Eindosieren eines gasförmigen Brennstoffs in den Ansaugtrakt einer Verbrennungskraftmaschine anzugeben, das weniger zu Ankerprellern neigt und zudem eine hohe Dosiergenauigkeit selbst bei kleinen Gasmengen zeigt. Ferner soll der Verschleiß im Bereich eines Ventilsitzes und/oder eines mit dem Ventilsitz dichtend zusammenwirkenden Schließelements reduziert werden.

Zur Lösung der Aufgabe wird das Gasventil mit den Merkmalen des Anspruchs 1 vorgeschlagen. Vorteilhafte Weiterbildungen der Erfindung sind den Unteransprüchen zu entnehmen.

### Offenbarung der Erfindung

Das zum Eindosieren eines gasförmigen Brennstoffs in einen Ansaugtrakt einer Verbrennungskraftmaschine vorgeschlagene Gasventil umfasst einen Elektromagneten zur Einwirkung auf einen hubbeweglichen Anker, der in Richtung mindestens eines Ventilsitzes von der Federkraft einer Feder beaufschlagt ist. Erfindungsgemäß ist zur Reduzierung der Geschwindigkeit des Ankers zumindest über einen Teilbereich seines Hubes eine Dämpfungseinrichtung vorgesehen, die mindestens ein fluidgefülltes variables Dämpfervolumen umfasst, das von einem mit dem einzudosierenden Gas beaufschlagten Bereich gasdicht getrennt ist.

Das mindestens eine fluidgefüllte variable Dämpfervolumen der Dämpfungseinrichtung bewirkt, dass die Bewegung des Ankers beim Öffnen und/oder beim Schließen des Gasventils abgebremst wird. Das heißt, dass der Anker mit verringerter Geschwindigkeit seinen oberen und/oder unteren Hubanschlag erreicht. Die Verringerung der Ankergeschwindigkeit beim Öffnen und/oder Schließen des Gasventils hat wiederum zur Folge, dass Schließpreller reduziert werden und/oder der Verschleiß im Bereich des Dichtsitzes gemindert wird. Wird zudem die Ankergeschwindigkeit während der ballistischen Ankerhubphase verringert, können kleine Gasmengen mit einer höheren Genauigkeit eindosiert werden.

Das mindestens eine zur Dämpfung vorgeschlagene fluidgefüllte variable Dämpfervolumen verändert seine Größe und/oder Form bevorzugt in Abhängigkeit vom Hub des Ankers. Das heißt, dass die Größe und/oder Form des Dämpfervolumens von der axialen Lage des Ankers abhängig ist. Um das Fluid, mit dem das Dämpfervolumen gefüllt, sicher von dem einzudosierenden Gs zu trennen, wird vorgeschlagen, dass das Fluid bereits während der Montage des Gasventils in das mindestens eine Dämpfervolumen eingebracht wird.

Gemäß einer bevorzugten Ausführungsform der Erfindung umfasst die Dämpfungseinrichtung ein erstes und ein zweites fluidgefülltes variables Dämpfervolumen, die über eine Drossel verbunden sind. Die Drossel ermöglicht, dass Fluid aus dem einen Dämpfervolumen in das andere Dämpfervolumen abströmen kann bzw. umgekehrt. Über die Auslegung der Drossel, d. h. den Drosselquerschnitt, kann demnach die Dämpfungswirkung eingestellt werden.

Die Drossel ist vorzugsweise in einer Drosselplatte ausgebildet, die zwischen dem ersten und dem zweiten Dämpfervolumen angeordnet ist. Die Drosselplatte ermöglicht eine kraft-, form- und/oder stoffschlüssige Verbindung der Dämpfungseinrichtung mit dem Anker, so dass die axiale Lage der Drosselplatte vom Hub des Ankers abhängig ist.

Bevorzugt ist die Drosselplatte mit dem Anker fest verbunden, beispielsweise über eine Press-, Löt-, Schweiß- oder Klebeverbindung. Die feste Verbindung stellt sicher, dass der Anker die Drosselplatte mitführt und zwar unabhängig davon, ob das Gasventil öffnet oder schließt. Alternativ wird vorgeschlagen, dass die Drosselplatte mittels der Federkraft einer Feder gegen den Anker axial vorgespannt ist. Hierzu kann die bereits vorhandene Feder eingesetzt werden, deren Federkraft den Anker in Richtung eines Ventilsitzes beaufschlagt. Eine zusätzliche Feder ist demnach nicht erforderlich. Vorzugsweise ist im Anker ein Absatz zur Abstützung der Drosselplatte vorgesehen.

Des Weiteren bevorzugt wird zumindest ein Dämpfervolumen von einem Körper begrenzt, der elastisch und/oder verformbar ist. Der Körper dient der gasdichten Trennung des Dämpfervolumens von einem Bereich, der mit dem einzudosierenden Gas beaufschlagt ist. Die Elastizität und/oder Verformbarkeit des Körpers gewährleistet, dass das Dämpfervolumen hinsichtlich Größe und/oder Form variabel ist.

Der elastische und/oder verformbare Körper kann beispielsweise als hohlzylinderförmiger Faltenbalg ausgebildet sein. Dieser sollte derart im Gasventil angeordnet sein, dass sich die Falten in Bewegungsrichtung des Ankers öffnen oder schließen. Das Dämpfervolumen ist dann vorrangig in axialer Richtung variabel, während seine Querschnittsfläche im Wesentlichen gleich bleibt.

Bei einem ersten und einem zweiten Dämpfervolumen mit jeweils fester Querschnittsfläche kann über das Querschnittsflächenverhältnis A₁/A₂ der beiden Volumina die Dämpfungswirkung eingestellt werden. Gilt A₁=A₂, verändert sich die Gesamtlänge der Dämpfungseinrichtung in axialer Richtung nicht, und zwar unabhängig von der axialen Lage der Drosselplatte.

Um das von einem elastischen und/oder verformbaren Körper begrenzte Dämpfervolumen von dem mit dem einzudosierenden Gas beaufschlagten Bereich gasdicht zu trennen, wird vorgeschlagen, dass der Körper stirnseitig geschlossen ist. Das heißt, dass der Körper stirnseitig eine Wand aufweist. Dies hat den Vorteil, dass bei Vorhandensein einer Drosselplatte der Körper nur noch an diese gasdicht angeschlossen werden muss.

In Weiterbildung der Erfindung wird vorgeschlagen, dass zumindest ein Körper eine stirnseitige Anschlagfläche besitzt, die mit dem Elektromagneten und/oder mit einem Führungszapfen zur Führung des Ankers einen Hubanschlag für den Körper ausbildend zusammenwirkt. Die Anschlagfläche kann beispielsweise über eine den Körper stirnseitig schließende Wand ausgebildet werden. Der axiale Abstand der Anschlagfläche zum Elektromagneten bzw. zum Führungszapfen definiert einen Leerhub der Dämpfungseinrichtung, während dessen die Ankerbewegung ungedämpft bleibt. Erst mit Anschlagen der Dämpfungseinrichtung am Elektromagneten bzw. am Führungszapfen setzt die Dämpfungswirkung ein. Über den axialen Abstand kann demnach die Dämpfungswirkung gezielt beeinflusst werden.

Alternativ oder ergänzend wird vorgeschlagen, dass zumindest ein Körper von der Federkraft einer zusätzlichen Dämpferfeder beaufschlagt ist. In Abhängigkeit von der konkreten Funktion der Dämpferfeder kann diese innerhalb oder außerhalb des Körpers angeordnet sein. Beispielsweise kann die zusätzliche Dämpferfeder zur Rückstellung der Dämpfungseinrichtung eingesetzt werden. Ferner kann über eine zusätzliche Dämpferfeder eine axiale Vorspannung der Dämpfungseinrichtung gegen eine Anlagefläche bewirkt werden. Bei der Anlagefläche kann es sich insbesondere um eine Stirnfläche eines Führungszapfens zur Führung des Ankers handeln. Über den Einsatz zusätzlicher Dämpferfedern kann die Dämpfungswirkung gezielt beeinflusst werden.

Um ein insbesondere in axialer Richtung kompakt bauendes Gasventil zu schaffen, wird vorgeschlagen, dass die Dämpfungseinrichtung zumindest teilweise in einer Ausnehmung des Ankers aufgenommen ist. Die Ausnehmung ist vorzugsweise mittig in einer dem Elektromagneten zugewandten Stirnfläche des Ankers ausgebildet. Die mittige Anordnung verhindert eine ungleichmäßige Belastung des Ankers durch die Dämpfungseinrichtung.

Darüber hinaus kann die Dämpfungseinrichtung zumindest teilweise in einer Ausnehmung des Elektromagneten aufgenommen sein. Die Ausnehmung ist dann vorzugsweise mittig in einer dem Anker zugewandten Stirnfläche des Elektromagneten ausgebildet. Da in der Regel der Elektromagnet und der Anker koaxial angeordnet sind, hat die mittige Anordnung in Bezug auf die Stirnfläche des Elektromagneten die Folge, dass die Dämpfungseinrichtung wiederum mittig in Bezug auf den Anker angeordnet ist.

Gemäß einer bevorzugten Ausführungsform der Erfindung weist der Anker zumindest einen plattenförmigen Abschnitt zur Ausbildung einer Ankerplatte und/oder zur Ausbildung oder Aufnahme eines Ventilschließelements auf. Das heißt, dass der Anker bevorzugt als Flachanker ausgeführt ist. Dadurch kann die Bauhöhe des Gasventils reduziert werden. Sofern der Anker einen plattenförmigen Abschnitt zur Ausbildung oder Aufnahme eines Ventilschließelements besitzt, kann auf ein separates Ventilschließelement verzichtet werden. Über den plattenförmigen Abschnitt können zudem mehrere, beispielsweise konzentrisch angeordnete Ventilsitze gleichzeitig geöffnet oder geschlossen werden. Vorzugsweise bildet zumindest ein Dichtkörper aus einem elastischen Werkstoff das Ventilschließelement aus, um ein gasdichtes Schließen des Gasventils sicherzustellen. Der plattenförmige Abschnitt des Ankers dient dann der Aufnahme des bzw. der Dichtkörper.

Bevorzugt ist zumindest ein Ventilsitz ringförmig ausgestaltet. Der ringförmige Ventilsitz wird von zwei konzentrisch angeordneten ringförmigen Dichtkonturen begrenzt, die vorzugsweise durch ein plattenförmiges Ventilsitzelement ausgebildet werden. Das heißt, dass das Gasventil ein plattenförmiges Ventilsitzelement umfasst, in dem mindestens ein ringförmiger Ventilsitz ausgebildet ist. Auf diese Weise können über das Gasventil auch große Gasmengen eindosiert werden.

Bevorzugte Ausführungsformen der Erfindung werden nachfolgend anhand der beigefügten Zeichnungen näher erläutert. Diese zeigen:
Fig. 1 einen schematischen Längsschnitt durch ein erfindungsgemäßes Gasventil gemäß einer ersten bevorzugten Ausführungsform in geschlossenem Zustand,
Fig. 2 das Gasventil der Fig. 1 in geöffnetem Zustand,
Fig. 3 eine schematische Darstellung der Dämpfungseinrichtung des Gasventils der Fig. 1 und 2,
Fig. 4 einen schematischen Längsschnitt durch ein erfindungsgemäßes Gasventil gemäß einer zweiten bevorzugten Ausführungsform,
Fig. 5 einen schematischen Längsschnitt durch ein erfindungsgemäßes Gasventil gemäß einer dritten bevorzugten Ausführungsform und
Fig. 6 einen schematischen Längsschnitt durch ein erfindungsgemäßes Gasventil gemäß einer vierten bevorzugten Ausführungsform.

### Ausführliche Beschreibung der Zeichnungen

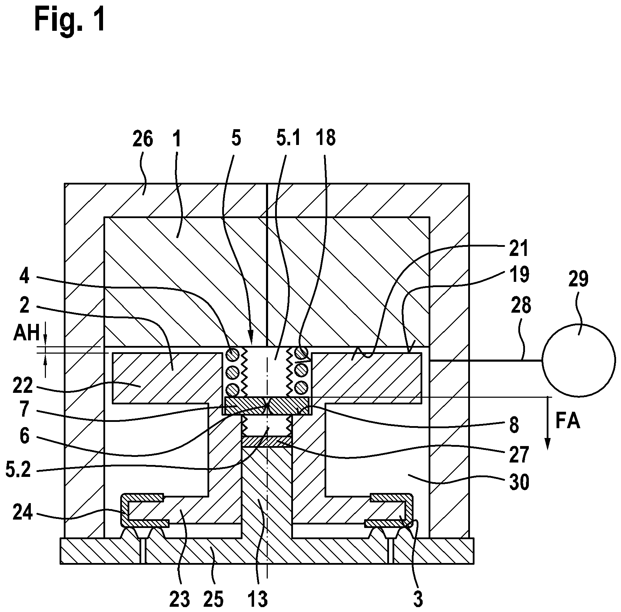

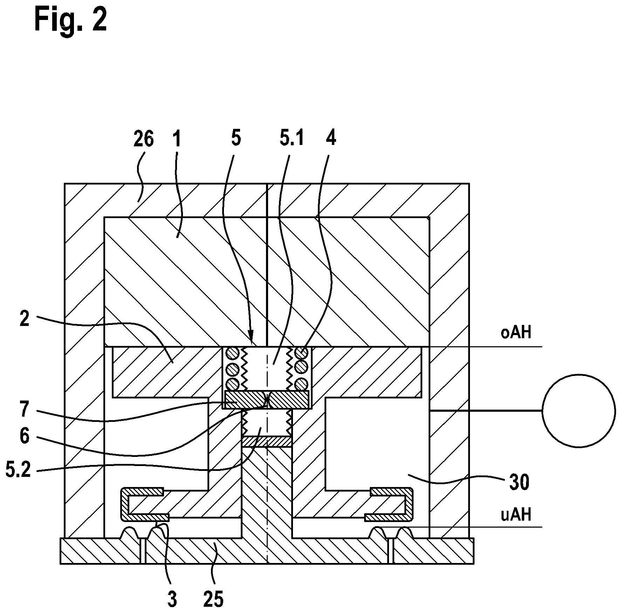

Das in den Figuren 1 und 2 dargestellte Gasventil umfasst ein Gehäuse 26, in dem ein Elektromagnet 1 und ein mit dem Elektromagneten 1 zusammenwirkender hubbeweglicher Anker 2 aufgenommen sind. Der Anker 2 weit hierzu einen ersten plattenförmigen Abschnitt 22 auf, der eine dem Elektromagneten 1 zugewandte Stirnfläche 19 besitzt, die als Polfläche dient. In der Stirnfläche 19 ist eine zentrale Ausnehmung 18 zur Aufnahme einer Feder 4 ausgebildet, deren Federkraft den Anker 2 in Richtung eines ringförmigen Ventilsitzes 3 beaufschlagt, der in einem plattenförmigen Ventilsitzelement 25 ausgebildet ist. Zum gasdichten Schließen des Ventilsitzes 3 weist der Anker 2 einen zweiten plattenförmigen Abschnitt 23 auf, auf dem ein als Ventilschließelement 24 dienender elastischer Dichtkörper angeordnet ist. Zur Führung des Ankers 2 ist ein zentral angeordneter Führungszapfen 13 vorgesehen, der durch das Ventilsitzelement 25 ausgebildet wird. Zur Aufnahme des Führungszapfens 13 ist die zentrale Ausnehmung 18 über die gesamte Höhe des Ankers 2 geführt.

Die Ausnehmung 18 dient ferner der Aufnahme einer Dämpfungseinrichtung 5, die ein erstes und ein zweites fluidgefülltes variables Dämpfervolumen 5.1, 5.2 umfasst. Erstes und zweites Dämpfervolumen 5.1, 5.2 sind über eine Drossel 6 verbunden, die in einer Drosselplatte 7 ausgebildet ist. Die Drosselplatte 7 ist über die Federkraft der ebenfalls in der Ausnehmung 18 aufgenommenen Feder 4 gegen einen Absatz 8 des Ankers 2 axial vorgespannt. Die Drosselplatte 7 hebt und senkt sich somit gemeinsam mit dem Anker 2 bzw. der Anker 2 führt die Drosselplatte 7 mit.

Jedes Dämpfervolumen 5.1, 5.2 wird von einem Körper 9, 10 umschlossen, der als Faltenbalg ausgebildet und durch Verschweißen gasdicht mit der Drosselplatte 7 verbunden ist. Da die Körper 9, 10 jeweils andernends am Elektromagneten 1 bzw. am Führungszapfen 13 anliegen, führt der Hub des Ankers 2 dazu, dass sich der Faltenbalg streckt oder zusammenzieht. Entsprechend vergrößert oder verkleinert sich das im jeweiligen Faltenbalg ausgebildete Dämpfervolumen 5.1, 5.2 und der dort herrschende Druck fällt ab oder steigt an, da das Fluid nur gedrosselt ab- bzw. zuströmen kann.

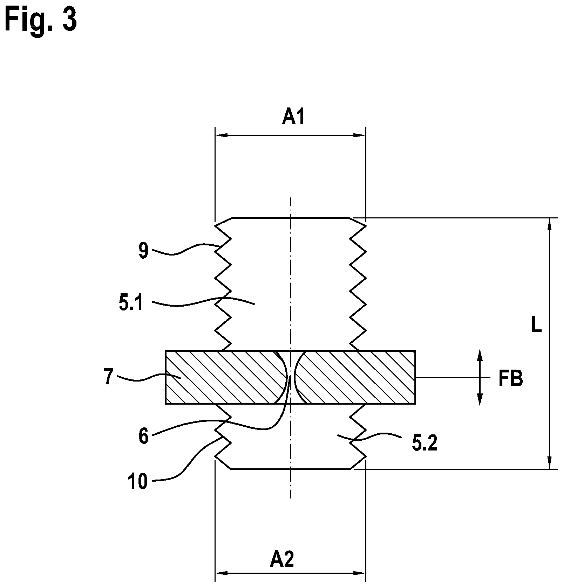

Wird der Elektromagnet 1 bestromt, bewegt sich der Anker 2 entgegen der Federkraft F_{A} der Feder 4 nach oben und gibt den Ventilsitz 3 frei. Der Ankerhub AH bewirkt eine Verkleinerung des oberen Dämpfervolumens 5.1, da der das Volumen begrenzende Körper 9 aufgrund der Abstützung am Elektromagneten 1 zusammengedrückt wird. Dabei strömt Fluid aus dem oberen Dämpfervolumen 5.1 über die Drossel 6 in das untere Dämpfervolumen 5.2 ab. In Abhängigkeit von der Querschnittsfläche A₁ und der Auslegung der Drossel 6 wird daher die Aufwärtsbewegung des Ankers 2 gebremst (siehe Fig. 3). Dies ermöglicht zum Einen das kontrollierte Eindosieren kleiner Gasmengen während des ballistischen Ankerhubbetriebs. Zum Anderen wird ein Ankerprellen am oberen Hubanschlag oAH des Ankers 2 vermieden. Das einzudosierende Gas wird über eine Gasversorgungsleitung 28 einem Gasspeicher 29 entnommen. Der mit dem einzudosierenden Gas beaufschlagte Bereich ist mit dem Bezugszeichen 30 gekennzeichnet.

Zum Schließen des Gasventils wird die Bestromung des Elektromagneten beendet, und die Federkraft F_{A} der Feder 4 bewirkt die Rückstellung des Ankers 2 gegen den Ventilsitz 3, welcher zugleich den unteren Hubanschlag uAH des Ankers 2 ausbildet. Da die Dämpfungseinrichtung 5 über den Körper 10 am Führungszapfen 13 bzw. einer zwischenliegenden Einstellscheibe 27 abgestützt ist, wird bei der Abwärtsbewegung des Ankers 2 nunmehr das untere Dämpfervolumen 5.2 verkleinert und Fluid strömt über die Drossel 6 in das obere Dämpfervolumen 5.1 zurück. Die dabei bewirkte Dämpfung hängt von der Auslegung der Drossel 6 und der Querschnittsfläche A₂ ab (siehe Fig. 3).

Da über die Dämpfungseinrichtung 5 auch die Abwärtsbewegung des Ankers 2 gebremst wird, verringert sich der Verschleiß des Gasventils im Bereich des Ventilsitzes 3 bzw. im Bereich des mit dem Ventilsitz 3 zusammenwirkenden Ventilschließelements 24. Insbesondere dann, wenn - wie vorliegend der Fall - das Ventilschließelement 24 durch einen Dichtkörper aus einem vergleichsweise "weichen" Material ausgebildet wird, kann auf diese Weise die Lebensdauer des Gasventils deutlich verlängert werden.

Der Fig. 3 ist eine schematische Darstellung der Dämpfungseinrichtung 5 der Ausführungsform der Figuren 1 und 2 zu entnehmen. Hier sind die Querschnittsflächen A₁ und A₂ jeweils gleich gewählt. Dies hat zu Folge, dass - unabhängig von der axialen Lage der Drosselplatte 7 - die Länge L der Dämpfungseinrichtung 5 immer gleich ist, sofern die Federrate FB der Körper 9, 10 gleich ist. Denn in der Ausführung als Faltenbalg kann eine axiale Vorspannung der Körper 9, 10 gegen den Elektromagneten 1 bzw. die Einstellscheibe 27 allein über die Federrate FB der Faltenbalge bewirkt werden.

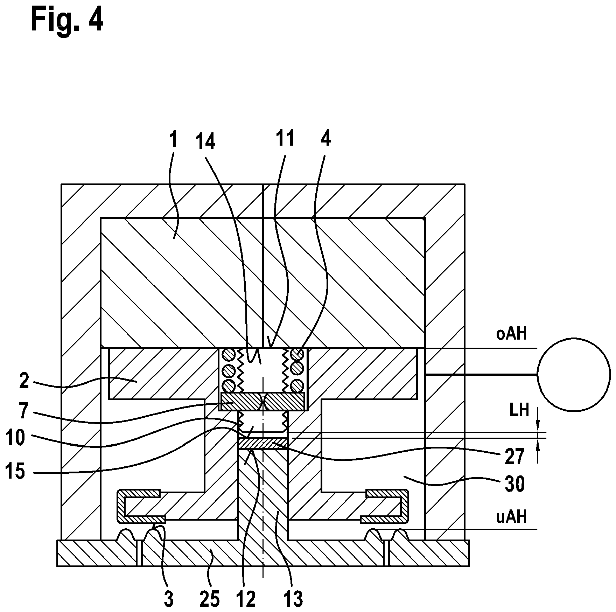

Eine weitere bevorzugte Ausführungsform der Erfindung ist in der Fig. 4 dargestellt. Hier ist die Federrate FB zumindest des unteren Faltenbalgs derart ausgelegt, dass in Offenstellung des Gasventils der Körper 10 nicht an der Einstellscheibe 27 anliegt. Stattdessen weist der Körper 10 eine Anschlagfläche 12 auf, die mit der Einstellscheibe 27 einen Hubanschlag 15 ausbildend zusammenwirkt. Der Axialspalt zwischen der Einstellscheibe 27 und dem Körper 10 definiert einen Leerhub LH, den es zu durchlaufen gilt, bis die Dämpfungswirkung der Dämpfungseinrichtung 5 einsetzt und die Bewegung des Ankers 2 bremst. Der Leerhub LH ist dabei kleiner als der Ankerhub AH zu wählen, damit die Dämpfungswirkung einsetzt, bevor der Anker 2 seinen unteren Hubanschlag uAH erreicht.

Entsprechend kann in Schließstellung des Ankers 2 ein Axialspalt zwischen dem Körper 9 und dem Elektromagneten 1 ausgebildet werden, so dass ein Leerhub LH auch während des Öffnens des Gasventils durchlaufen wird. In diesem Fall bildet der Körper 9 eine Anschlagfläche 11 aus, die mit dem Elektromagneten 1 einen Hubanschlag 14 ausbildend zusammenwirkt.

Um eine Relativbewegung der Drosselplatte 7 gegenüber dem Anker 2 sicher zu verhindern, kann diese mit dem Anker 2 fest verbunden sein.

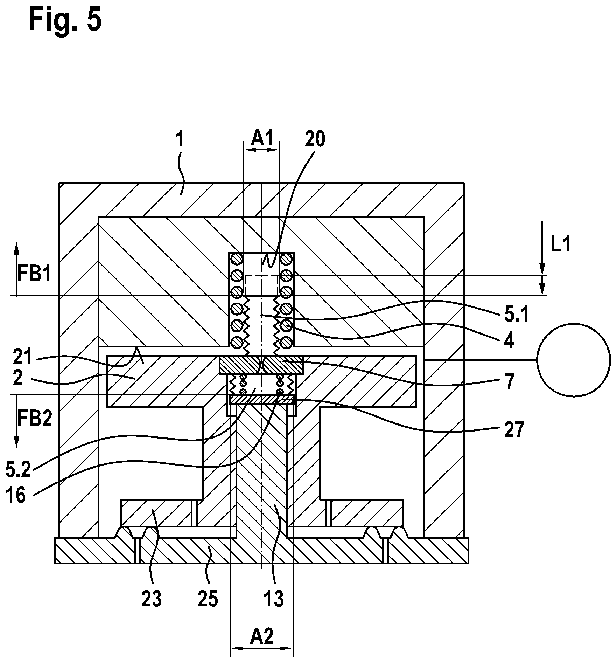

Der Fig. 5 ist eine weitere Ausführungsform eines erfindungsgemäßen Gasventils zu entnehmen. Diese unterscheidet sich von den zuvor beschriebenen dadurch, dass die Dämpfungseinrichtung 5 abschnittsweise in einer Ausnehmung 20 des Elektromagneten 1 aufgenommen ist, die mittig in Bezug auf eine Stirnfläche 21 des Elektromagneten 1 angeordnet ist. Ferner gilt A₁ < A₂ sowie FB₁ < FB₂.

Die Vergrößerung der Querschnittsfläche A₂ bewirkt eine Verstärkung der Dämpfungswirkung. Die Querschnittsfläche A₁ hat demgegenüber lediglich Einfluss auf das Maß der Längenausdehnung des oberen Faltenbalgs und nicht auf den Grad der Dämpfung.

Die Erhöhung der Federrate FB₂ des unteren Faltenbalgs soll sicherstellen, dass ein dauerhafter Kontakt mit der Einstellscheibe 27 gewährleistet ist. Alternativ oder ergänzend kann eine Dämpferfeder 16 vorgesehen werden, die idealerweise im Dämpfervolumen 5.2 angeordnet wird.

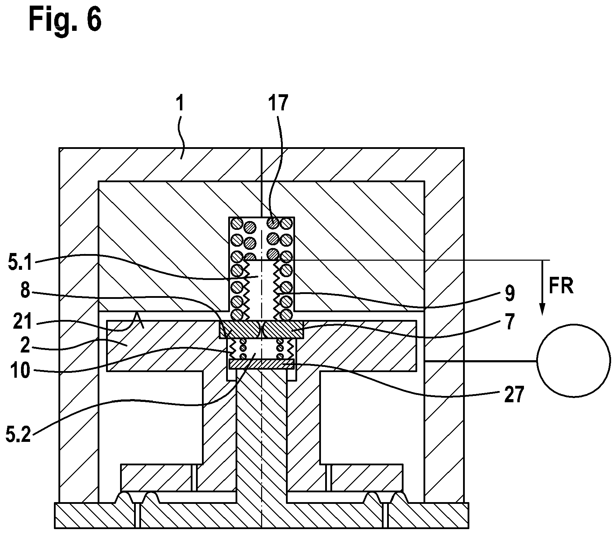

Fig. 6 zeigt eine weitere mögliche Ausführungsform. Diese unterscheidet sich von der der Fig. 5 insbesondere dadurch, dass die Rückstellung des unteren Faltenbalgs über die hydraulisch wirksame Kraft FR bewirkt wird. Zusätzlich ist eine Dämpferfeder 17 vorgesehen, die am oberen Faltenbalg abgestützt ist. Wegen der Abstützung der Drosselplatte 7 am Absatz 8 des Ankers 2 drückt die Dämpferfeder 17 soweit durch, dass der untere Faltenbalg in Kontakt mit der Einstellscheibe 27 gehalten wird. Bei einer Aufwärtsbewegung des Ankers 2 wird Fluid vom oberen Dämpfervolumen 5.1 in das untere Dämpfervolumen 5.2 gepumpt und somit die Bewegung des Ankers 2 gebremst.

## Patentansprüche

1. Gasventil zum Eindosieren eines gasförmigen Brennstoffs in einen Ansaugtrakt einer Verbrennungskraftmaschine, umfassend einen Elektromagneten (1) zur Einwirkung auf einen hubbeweglichen Anker (2), der in Richtung mindestens eines Ventilsitzes (3) von der Federkraft einer Feder (4) beaufschlagt ist, wobei zur Reduzierung der Geschwindigkeit des Ankers (2) zumindest über einen Teilbereich seines Hubes eine Dämpfungseinrichtung (5) vorgesehen ist, die ein erstes fluidgefülltes variables Dämpfervolumen (5.1) umfasst, das von einem mit dem einzudosierenden Gas beaufschlagten Bereich (30) gasdicht getrennt ist,
**dadurch gekennzeichnet, dass** die Dämpfungseinrichtung (5) ein zweites fluidgefülltes variables Dämpfervolumen (5.2) umfasst, wobei die Dämpfervolumen (5.1, 5.2) über eine Drossel (6) verbunden sind, wobei die Drossel (6) in einer Drosselplatte (7) ausgebildet ist, die zwischen dem ersten und dem zweiten Dämpfervolumen (5.1, 5.2) angeordnet ist und die mit dem Anker (2) fest verbunden oder mittels der Federkraft der Feder (4) gegen den Anker (2) axial vorgespannt ist.

2. Gasventil nach Anspruch 1,
**dadurch gekennzeichnet, dass** im Anker (2) ein Absatz (8) zur Abstützung der Drosselplatte (7) vorgesehen ist.

3. Gasventil nach einem der vorhergehenden Ansprüche,
**dadurch gekennzeichnet, dass** zumindest eines der Dämpfervolumen (5.1, 5.2) von einem elastischen und/oder verformbaren Körper (9, 10) begrenzt wird, der vorzugsweise als hohlzylinderförmiger Faltenbalg ausgebildet und/oder stirnseitig geschlossen ist.

4. Gasventil nach Anspruch 3,
**dadurch gekennzeichnet, dass** zumindest ein Körper (9, 10) eine stirnseitige Anschlagfläche (11, 12) besitzt, die mit dem Elektromagneten (1) und/oder mit einem Führungszapfen (13) zur Führung des Ankers (2) einen Hubanschlag (14, 15) für den Körper (9, 10) ausbildend zusammenwirkt.

5. Gasventil nach Anspruch 3 oder 4,
**dadurch gekennzeichnet, dass** zumindest ein Körper (9, 10) von der Federkraft einer Dämpferfeder (16, 17) beaufschlagt ist, die innerhalb oder außerhalb des Körpers (9, 10) angeordnet ist.

6. Gasventil nach einem der vorhergehenden Ansprüche,
**dadurch gekennzeichnet, dass** die Dämpfungseinrichtung (5) zumindest teilweise in einer Ausnehmung (18) des Ankers (2) aufgenommen ist, wobei vorzugsweise die Ausnehmung (18) mittig in einer dem Elektromagneten (1) zugewandten Stirnfläche (19) des Ankers (2) ausgebildet ist.

7. Gasventil nach einem der vorhergehenden Ansprüche,
**dadurch gekennzeichnet, dass** die Dämpfungseinrichtung (5) zumindest teilweise in einer Ausnehmung (20) des Elektromagneten (1) aufgenommen ist, wobei vorzugsweise die Ausnehmung (20) mittig in einer dem Anker (2) zugewandten Stirnfläche (21) des Elektromagneten (1) ausgebildet ist.

8. Gasventil nach einem der vorhergehenden Ansprüche,
**dadurch gekennzeichnet, dass** der Anker (2) zumindest einen plattenförmigen Abschnitt (22, 23) zur Ausbildung einer Ankerplatte und/oder zur Ausbildung oder Aufnahme eines Ventilschließelements (24) aufweist, wobei vorzugsweise ein Dichtkörper aus einem elastischen Werkstoff das Ventilschließelement (24) ausbildet.

9. Gasventil nach einem der vorhergehenden Ansprüche,
**dadurch gekennzeichnet, dass** der zumindest eine Ventilsitz (3) ringförmig ausgestaltet ist und von zwei konzentrisch angeordneten ringförmigen Dichtkonturen begrenzt wird, die vorzugsweise durch ein plattenförmiges Ventilsitzelement (25) ausgebildet werden.

## Claims

1. Gas valve for dosing a gaseous fuel into an intake tract of an internal combustion engine, comprising an electromagnet (1) for acting on a reciprocating armature (2) which is loaded in the direction of at least one valve seat (3) by the spring force of a spring (4), wherein a damping device (5) which comprises a first fluid-filled, variable damping volume (5.1), which is separated in a gas-tight manner from a region (30) which is charged with the gas to be dosed in, is provided for reducing the speed of the armature (2) at least over a partial range of its stroke, **characterized in that** the damping device (5) comprises a second fluid-filled, variable damping volume (5.2), wherein the damping volumes (5.1, 5.2) are connected via a throttle (6), wherein the throttle (6) is formed in a throttle plate (7) which is arranged between the first and the second damping volume (5.1, 5.2) and which is connected fixedly to the armature (2) or is prestressed axially against the armature (2) by means of the spring force of the spring (4).

2. Gas valve according to Claim 1, **characterized in that** a shoulder (8) for supporting the throttle plate (7) is provided in the armature (2).

3. Gas valve according to either of the preceding claims,
**characterized in that** at least one of the damping volumes (5.1, 5.2) is delimited by an elastic and/or deformable body (9, 10) which is preferably formed as a hollow cylindrical bellows and/or is closed at one end side.

4. Gas valve according to Claim 3,
**characterized in that** at least one body (9, 10) has an end-side stop surface (11, 12) which interacts, so as to form a stroke stop (14, 15) for the body (9, 10), with the electromagnet (1) and/or with a guide pin (13) for guiding the armature (2).

5. Gas valve according to Claim 3 or 4,
**characterized in that** at least one body (9, 10) is loaded by the spring force of a damping spring (16, 17) which is arranged inside or outside the body (9, 10).

6. Gas valve according to one of the preceding claims,
**characterized in that** the damping device (5) is accommodated at least partially in a recess (18) of the armature (2), wherein the recess (18) is preferably formed centrally in an end face (19), facing the electromagnet (1), of the armature (2).

7. Gas valve according to one of the preceding claims,
**characterized in that** the damping device (5) is accommodated at least partially in a recess (20) of the electromagnet (1), wherein the recess (20) is preferably formed centrally in an end face (21), facing the armature (2), of the electromagnet (1).

8. Gas valve according to one of the preceding claims,
**characterized in that** the armature (2) has at least one plate-like section (22, 23) for forming an armature plate and/or for forming or for holding a valve closure element (24), wherein a sealing body composed of an elastic material preferably forms the valve closure element (24).

9. Gas valve according to one of the preceding claims,
**characterized in that** the at least one valve seat (3) is of annular form and is delimited by two concentrically arranged, annular sealing contours which are preferably formed by a plate-like valve seat element (25).

## Revendications

1. Soupape de gaz destinée à doser un combustible gazeux dans un système d'admission d'un moteur à combustion interne, comportant un électroaimant (1) destiné à agir sur une armature (2) à mouvement de va-et-vient qui est sollicitée, par la force élastique d'un ressort (4), en direction d'au moins un siège de soupape (3), un dispositif d'amortissement (5) étant prévu pour réduire la vitesse de l'armature (2) au moins sur une partie de sa course, lequel comporte un premier volume d'amortissement (5.1) variable rempli de fluide, lequel volume est séparé de manière étanche aux gaz d'une région (30) exposée au gaz à doser,
**caractérisée en ce que** le dispositif d'amortissement (5) comporte un deuxième volume d'amortissement (5.2) variable rempli de fluide, les volumes d'amortissement (5.1, 5.2) étant reliés par le biais d'un étranglement (6), l'étranglement (6) étant formé dans une plaque d'étranglement (7) qui est disposée entre le premier et le deuxième volume d'amortissement (5.1, 5.2) et qui est reliée solidement à l'armature (2) ou est précontrainte axialement contre l'armature (2) au moyen de la force élastique du ressort (4).

2. Soupape de gaz selon la revendication 1,
**caractérisée en ce qu'**un épaulement (8) servant à supporter la plaque d'étranglement (7) est prévu dans l'armature (2).

3. Soupape de gaz selon l'une des revendications précédentes,
**caractérisée en ce qu'**au moins l'un des volumes d'amortissement (5.1, 5.2) est limité par un corps (9, 10) élastique et/ou déformable qui est de préférence réalisé sous forme de soufflet plissé de forme cylindrique creuse et/ou fermé du côté frontal.

4. Soupape de gaz selon la revendication 3,
**caractérisée en ce qu'**au moins un corps (9, 10) comporte une surface de butée (11, 12) côté frontal qui coopère avec l'électroaimant (1) et/ou avec un tenon de guidage (13) pour le guidage de l'armature (2) en formant une butée de course (14, 15) pour le corps (9, 10).

5. Soupape de gaz selon la revendication 3 ou 4,
**caractérisée en ce qu'**au moins un corps (9, 10) est sollicité par la force élastique d'un ressort d'amortissement (16, 17) qui est disposé à l'intérieur ou à l'extérieur du corps (9, 10).

6. Soupape de gaz selon l'une des revendications précédentes,
**caractérisée en ce que** le dispositif d'amortissement (5) est logé au moins partiellement dans un évidement (18) de l'armature (2), l'évidement (18) étant formé de préférence centralement dans une surface frontale (19) de l'armature (2) tournée vers l'électroaimant (1).

7. Soupape de gaz selon l'une des revendications précédentes,
**caractérisée en ce que** le dispositif d'amortissement (5) est logé au moins partiellement dans un évidement (20) de l'électroaimant (1), l'évidement (20) étant formé de préférence centralement dans une surface frontale (21) de l'électroaimant (1) tournée vers l'armature (2).

8. Soupape de gaz selon l'une des revendications précédentes,
**caractérisée en ce que** l'armature (2) comprend au moins une partie (22, 23) en forme de plaque servant à former une plaque d'armature et/ou à former ou à loger un élément de fermeture de soupape (24), un corps d'étanchéité constitué d'une matière élastique formant de préférence l'élément de fermeture de soupape (24).

9. Soupape de gaz selon l'une des revendications précédentes,
**caractérisée en ce que** l'au moins un siège de soupape (3) est configuré de manière annulaire et est délimité par deux contours d'étanchéité annulaires disposés de manière concentrique qui sont formés de préférence par un élément de siège de soupape (25) en forme de plaque.
